# FASCICULE DE BREVET EUROPEEN

(11) **EP 1 770 840 B1**
(45) Date de publication et mention de la délivrance du brevet: **11.11.2009**
(21) Numéro de dépôt: 06077268.8
(22) Date de dépôt: 12.07.2004
(51) Int. Cl.: H02G 3/32

(54) **Console avec maintien temporaire d'un couvercle de chemin de câbles**
Tragkonsole für Kabelkanal
Supporting bracket for cable channel

(30) Priorité: 18.07.2003 FR 0308806
(43) Date de publication de la demande: 04.04.2007
(62) Demande divisionnaire de: 04291765.8
(73) Titulaire: PLANET-WATTOHM, 60300 Senlis (FR)
(72) Inventeur: Coutant, Régis, 60117 Vauciennes (FR); Perrard, Stéphane, 95330 Domont (FR)
(74) Mandataire: Stankoff, Hélène

(56) Documents cités:
- EP-A2- 1 475 559
- US-A1- 5 004 192

## Description

La présente invention concerne une console de support d'un chemin de câbles.

De manière générale, la présente invention s'inscrit dans le domaine du cheminement des câbles ou fils électriques.

Il est connu d'utiliser, pour transporter des câbles en milieu industriel (usine, tunnel, etc.), des éléments de cheminement dénommés chemin de câbles.

Ces chemins de câbles ont sensiblement une section en U formant ainsi une gorge adaptée à loger les câbles à transporter. Ils sont fermés par un couvercle.

Ces chemins de câbles sont constitués par exemple de tôle ou en en matériau synthétique perforé, ou bien encore à partir de fils entrecroisés et soudés de manière à former une structure de panier. Ces chemins de câbles peuvent s'étendre suivant un parcours désiré.

Afin de fixer ces chemins de câbles à différentes surfaces, il est connu d'utiliser des consoles de support comportant des moyens permettant leur fixation sur différentes parois (mur, plafond...). Ces consoles de support présentent généralement une surface de support sur laquelle peuvent être fixés un ou plusieurs chemins de câbles.

Une telle console de support est décrite dans le document US 5 004 192.

La présente invention a pour but de proposer une console de support d'un chemin de câbles présentant de nombreuses fonctionnalités facilitant l'installation de chemins de câbles.

Selon l'invention, une console de support d'un chemin de câble comprend à une extrémité une rainure formée entre une extrémité de la surface de support d'un chemin de câbles et une extrémité terminale de la console de support, l'extrémité terminale étant adaptée à supporter temporairement un couvercle d'un chemin de câbles.

L'installateur peut ainsi accrocher temporairement un couvercle destiné au chemin de câbles, facilitant ainsi la manipulation de cette pièce. En effet, l'installation des chemins de câbles est réalisée généralement à des hauteurs importantes, ce qui génère des difficultés de manipulation, voire des risques d'accident. La rainure à l'extrémité de la console de support permet à l'installateur de ne plus avoir à tenir tant bien que mal le couvercle pendant l'installation du chemin de câbles sur la console de support.

Selon une autre caractéristique avantageuse de l'invention, l'extrémité terminale est constituée d'une aile de retour, cette aile de retour comprenant des moyens de fixation d'un accessoire d'étiquetage.

Il est ainsi possible de fixer un accessoire pouvant supporter une information destinée à un installateur ou un utilisateur ultérieur.

De nombreuses caractéristiques et avantages de l'invention apparaîtront encore dans la description ci-après.

Aux dessins annexés, donnés à titre d'exemples non limitatifs :
- les figures 1, 2 et 3 sont des vues en perspective respectivement de dessous, de dessus et de côté d'une console de support conforme à un mode de réalisation de la présente invention ;
- la figure 4 est une vue en perspective agrandie du détail IV à la figure 3 ;
- la figure 5 est une vue en perspective illustrant un premier mode d'utilisation d'une console de support conforme à l'invention, lors du montage d'un chemin de câbles;
- la figure 6 est une vue en perspective partielle de l'extrémité d'une console de support conforme à l'invention après montage d'un accessoire d'identification ;
- les figures 7 et 8 sont des vues en perspective de dessus et de dessous illustrant la fixation d'un chemin de câbles et d'un élément de tuyauterie sur une console de support conforme à l'invention ;
- la figure 9 est une vue perspective illustrant un second mode d'utilisation d'une console de support conforme à l'invention ;
- la figure 10 est une vue analogue à la figure 9, illustrant un troisième mode d'utilisation de la console de support conforme à l'invention ; et
- la figure 11 est une vue en perspective illustrant un quatrième mode de fixation de la console de support conforme à l'invention.

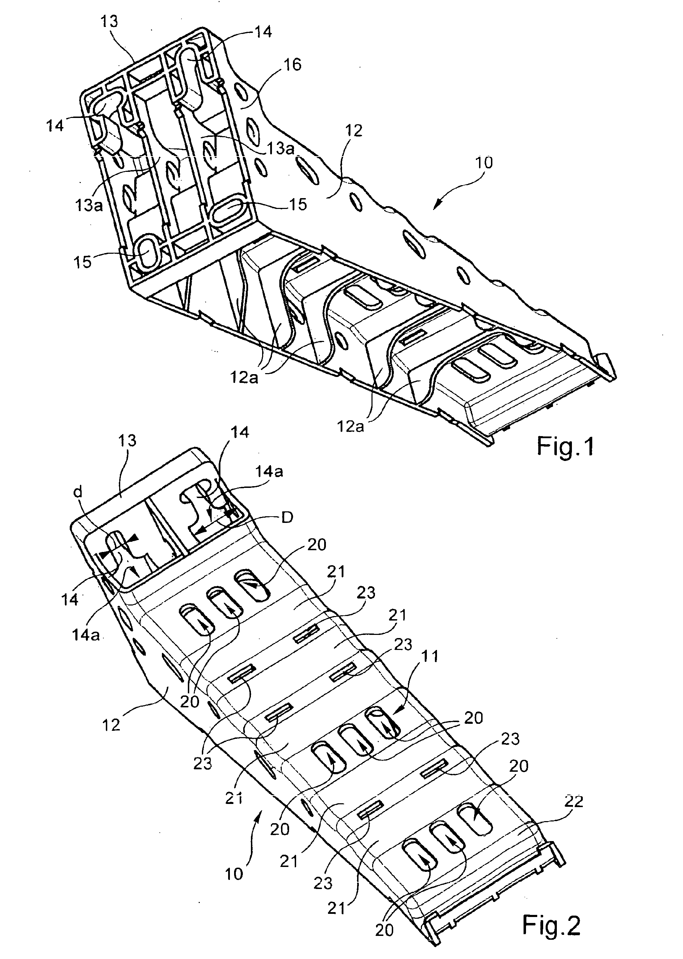

On va décrire tout d'abord en référence aux figures 1 à 4 une console de support d'un chemin de câbles conforme à un mode de réalisation de l'invention.

Une telle console de support est destinée principalement à positionner des chemins de câbles à proximité des parois (murs ou plafonds) dans différents types de constructions.

De manière générale, cette console de support 10 présente une forme globale en équerre.

Elle présente une surface de support 11 destinée à recevoir un chemin de câbles et à permettre la fixation de ce dernier sur la console de support. Cette surface de support 11 s'étend suivant une direction longitudinale qui est perpendiculaire à la direction de positionnement des chemins de câbles. Ces derniers s'étendent ainsi transversalement à la surface de support 11.

Cette surface de support 11 est munie de deux ailes 12 s'étendant sensiblement perpendiculairement à la surface de support 11. Chaque aile 12 a une forme triangulaire.

Cette surface de support 11 et les ailes 12 forment ainsi une section en U offrant une résistance adéquate pour permettre le support et la fixation des chemins de câbles.

Afin d'améliorer encore la rigidité de cette console de support, des nervures 12a s'étendent entre les ailes 12 et la surface de support 11, à l'intérieur de la forme en U, afin de rigidifier cette structure.

L'une des extrémités de cette console de support 10 est munie d'un socle 13 s'étendant ainsi dans un plan transversal à la section en U de la console.

Le socle 13 et la surface de support 11 s'étendent respectivement dans des plans perpendiculaires l'un à l'autre et définissent la structure à angle droit de la forme en équerre de la console de support.

Lorsque le socle 13 est fixé à une paroi, la surface de support 11 forme ainsi une surface perpendiculaire par rapport au plan de cette paroi.

Afin de permettre la fixation de la console de support notamment sur une paroi, le socle 13 comporte des trous oblongs de fixation 14, 15.

Ici, les trous de fixation 14 présentent, comme bien illustré à figure 2, une échancrure 14a de largeur D supérieure à la largeur d du trou de fixation 14 adapté à recevoir une vis ou un boulon de fixation.

Cette échancrure 14a, légèrement supérieure à la dimension de la tête de vis ou d'un ensemble tête et rondelle utilisé pour la fixation de la console, autorise la préfixation de la vis ou du boulon utilisé dans une paroi avant de venir fixer par accrochage la console sur cette vis ou boulon. Le blocage est ensuite réalisé de manière classique en serrant cette vis ou ce boulon.

Ce socle 13 peut comporter en outre différentes nervures de renforcement 13a permettant d'apporter la résistance souhaitée à ce socle de fixation.

Ce socle 13 est rattaché à la surface de support 11 et aux ailes 12 par des parois latérales 16 prolongeant les ailes 12 au-delà de la surface de support 11.

Ces parois latérales 16 présentent également symétriquement de chaque côté de la console des trous de fixation 17, 18.

Ces trous de fixation 17, 18 sont utilisés pour permettre l'association de cette console de support 10 à une glissière qui sera décrite ultérieurement.

Enfin, ce socle 13 comporte sur un bord de ses parois 16 destiné à venir en contact avec une paroi lors de la fixation de la console de support 10 des picots 19 servant d'index de positionnement de cette console de support sur une paroi.

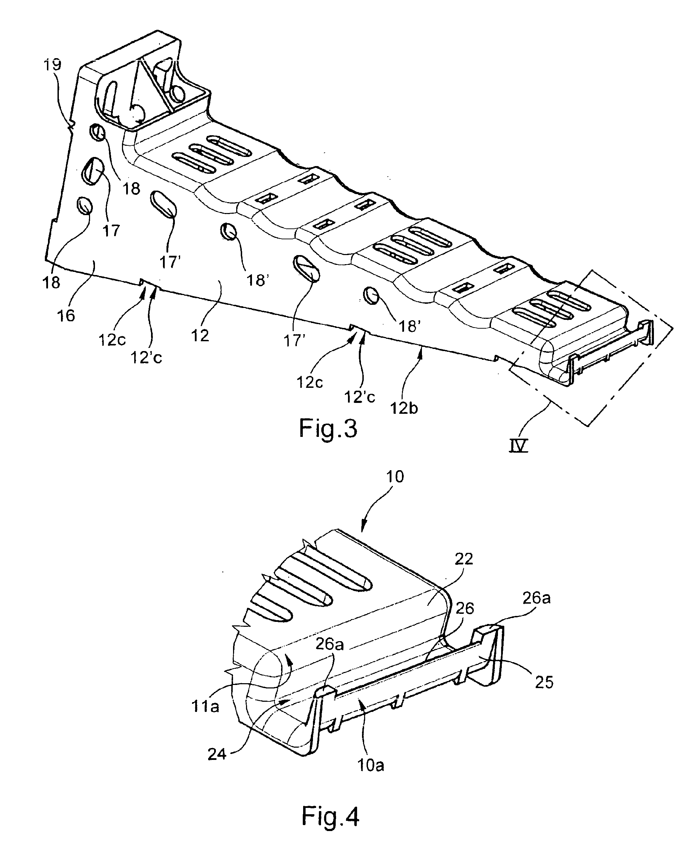

Comme bien illustré à la figure 3, chaque aile 12 de la console de support comporte de manière symétrique différents orifices de fixation 17', 18'.

En particulier, des orifices de forme oblongue 17' sont adaptés à coopérer avec une glissière qui sera décrite ultérieurement afin de permettre l'utilisation d'une console de support conforme à l'invention en élément de fixation au plafond. Ces orifices oblongs 17' s'étendent suivant une direction légèrement inclinée par rapport au plan défini par la surface de support 11.

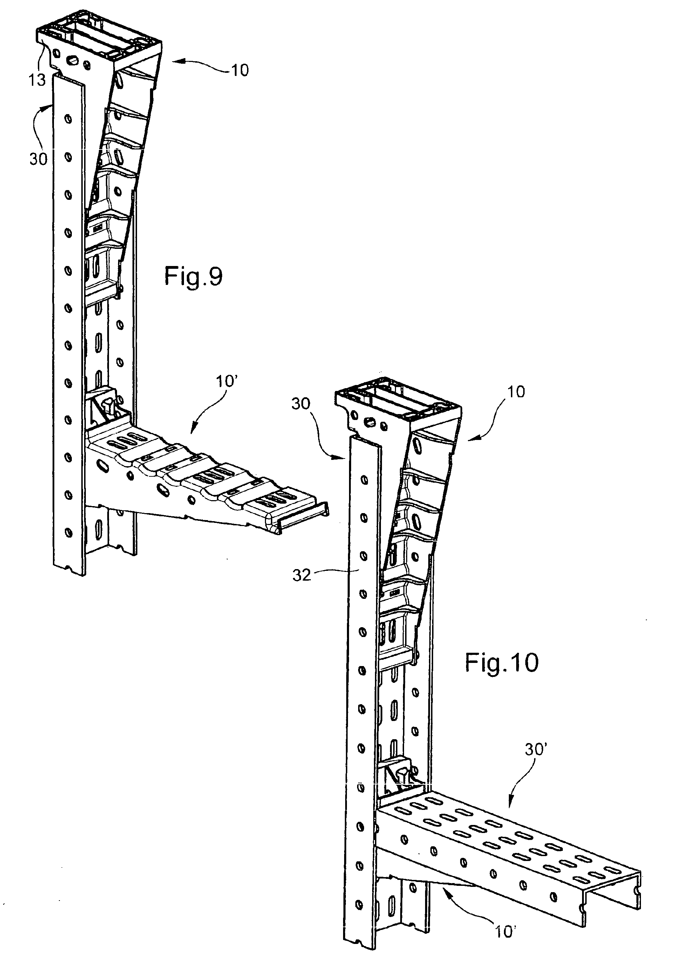

Des orifices circulaires 18' sont également adaptés à coopérer avec des trous complémentaires d'une glissière utilisée par exemple pour prolonger une console de support comme cela sera décrit ultérieurement en référence à la figure 10.

Enfin, un bord 12b des ailes 12, opposé à la surface de support 11, présente des crans 12c dont un des bords 12'c est parallèle à la surface de support 11 permettant ainsi de lier des chemins de câbles positionnés sur cette surface de support 11 grâce au passage d'un collier de fixation.

La surface de support 11 comporte des trous oblongs 20 destinés à coopérer avec des trous de fixation situés dans le fond d'un chemin de câbles pour permettre la fixation de ce dernier, par exemple par boulonnage.

Ces trous oblongs 20 s'étendent suivant la direction longitudinale de cette surface de support 11.

Dans cet exemple, ces trous oblongs 20 sont répartis en trois séries de trois trous oblongs 20, chaque série étant disposée à distance l'une de l'autre suivant la direction longitudinale de cette surface de support 11. De préférence, la distance séparant les séries de trous oblongs 20 deux par deux est différente, permettant ensuite la fixation de chemins de câbles de largeurs différentes sur la console de support 10.

La console 10 comporte des moyens de fixation d'un ou plusieurs éléments de tuyauterie.

La surface de support 11 comporte ainsi au moins une gorge 21, et dans cet exemple cinq gorges 21, adaptées à loger chacune un élément de tuyauterie.

Chaque gorge 21 forme ainsi un logement de section semi-circulaire adapté à recevoir un conduit cylindrique de tuyauterie.

Ces gorges 21 s'étendent transversalement à la surface de support 11, c'est-à-dire suivant une direction adaptée à être parallèle au chemin de câbles.

Ces gorges 21 forment ainsi une succession de cuvettes permettant de positionner et de maintenir des tuyauteries cheminant le long du chemin de câbles.

Les tuyauteries peuvent ainsi venir en appui continu sur le fond semi-circulaire d'une gorge 21.

En fonction de la position du chemin de câbles sur la surface de support 11, les tuyauteries peuvent être placées sur des gorges 21 entre le chemin de câbles et le socle 13, ou encore entre un chemin de câbles et une extrémité libre 22, opposée au socle 13, de la console de support 10.

Lorsqu'un chemin de câbles est positionné sur la surface de support 11, des gorges 21 peuvent être masquées sans inconvénient sous ce chemin de câbles.

Afin de permettre la fixation d'un élément de tuyauterie dans une gorge 21, la surface de support 11 comporte des orifices 20, 23 disposés de part et d'autre de chaque gorge 21.

On notera que certains de ces orifices sont communs aux trous oblongs 20 prévus pour le passage d'éléments de fixation tels que des boulons, d'un chemin de câbles sur la console de support 10.

Les autres orifices de fixation 23, prévus spécifiquement pour la fixation d'un élément de tuyauterie, sont constitués de fentes préférentiellement rectangulaires car mieux adaptées au passage d'un collier de fixation.

La fixation des éléments de tuyauterie peut ainsi être réalisée par un passage d'un collier de fixation au travers de trous oblongs 20 et/ou d'orifices rectangulaires 23.

Par ailleurs, selon l'invention, l'extrémité libre 22 de la console de support 10 est munie, comme illustré plus particulièrement à la figure 4, d'une rainure 24 formée entre l'extrémité 11 a de la surface de support 11 et une aile de retour 25.

Cette rainure 24 est située dans le prolongement de la surface de support 11 des chemins de câbles.

Cette rainure 24 s'étend transversalement à la direction longitudinale de la console de support 10, c'est-à-dire parallèlement à la direction longitudinale d'un chemin de câbles destiné à être fixé sur la console de support.

La section transversale de la rainure 24 est sensiblement en forme de U, le fond de la forme en U étant formé par la jonction de l'extrémité 11 a de la surface de support 11 et de l'aile de retour 25.

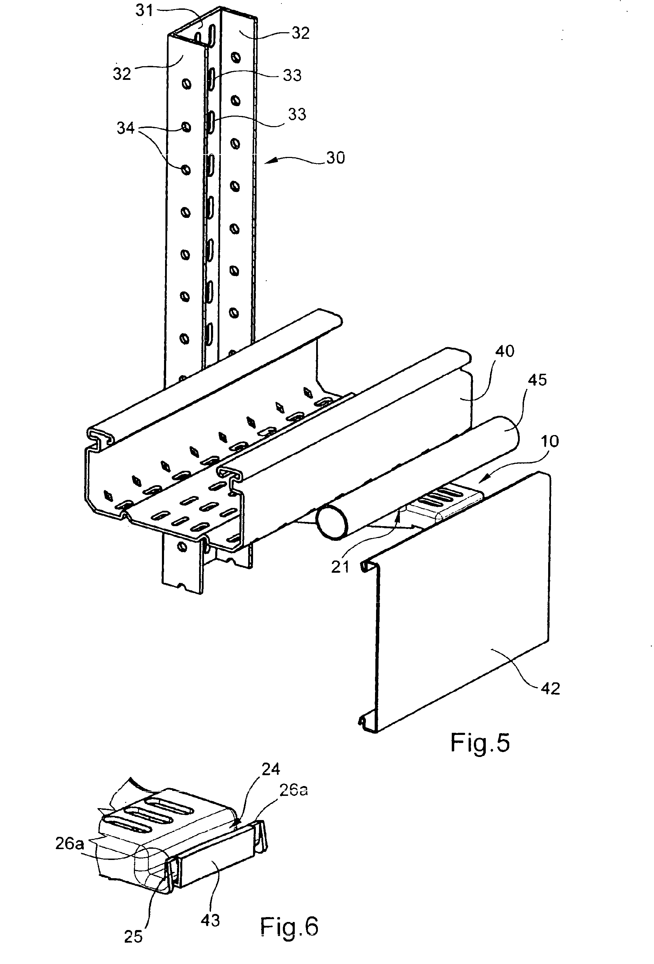

Bien entendu, l'extrémité libre de l'aile de retour 25 peut être située dans le même plan que la surface de support 11 comme illustré sur la figure 6, mais également en-dessous ou au-dessus de cette surface de support 11.

Cette rainure 24 permet d'accrocher en attente un couvercle destiné à fermer un chemin de câbles, après positionnement de celui-ci sur la console de support 10.

L'aile de retour 25 qui constitue l'extrémité terminale 10a de la console de support 10 comprend en outre des moyens de fixation d'un accessoire d'étiquetage.

Dans ce mode de réalisation, cette aile de retour 25 comporte une encoche 26 sur laquelle peut être fixée, par exemple par clipsage, un accessoire d'identification du genre porte-étiquette. Cette encoche 26 est délimitée dans l'aile de retour 25 par des butées 26a permettant de bloquer en translation un accessoire positionné sur l'aile de retour 25 dans l'encoche 26.

Cette console de support 10 est destinée à coopérer avec une glissière 30 telle qu'illustrée notamment à la figure 5.

Cette glissière se présente simplement sous la forme d'une structure allongée de section transversale en forme de U composée d'un fond 31 et de deux ailes latérales 32.

Le fond 31 de cette glissière présente des orifices 33 ayant une forme oblongue et s'étendant dans la direction longitudinale de la glissière.

Chaque aile 32 comporte également une série d'orifices 34 de forme circulaire.

La dimension intérieure de la section transversale de la glissière 30 correspond sensiblement à la dimension extérieure de la console de support 10 de telle sorte que cette dernière peut se loger dans différentes positions dans la glissière 30.

On va décrire à présent en référence aux figures 5 à 11 les différentes utilisations de la console de support conforme à l'invention.

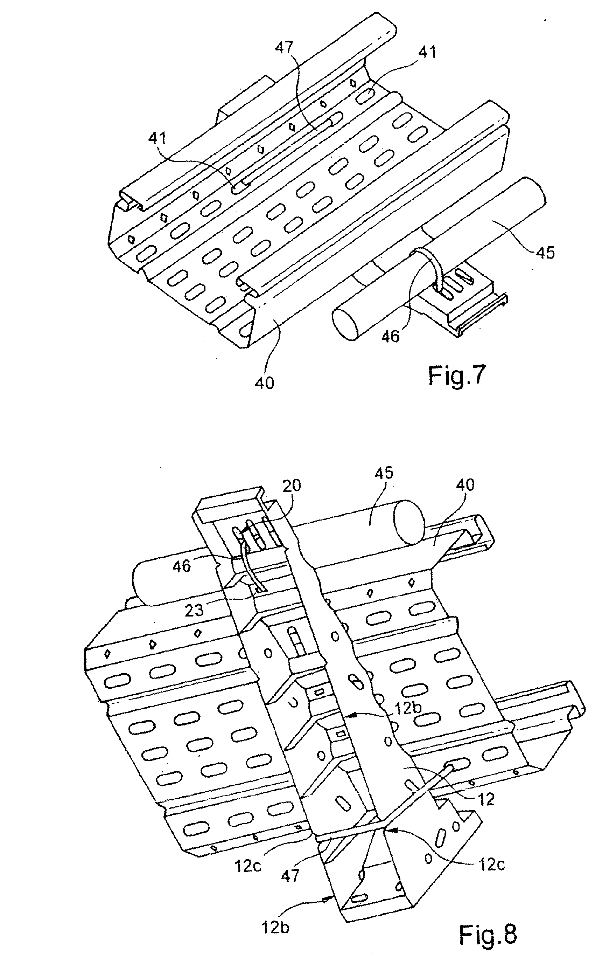

Tout d'abord, cette console de support 10 peut être utilisée seule pour supporter un chemin de câbles 40 (voir figures 7 et 8).

Cette console de support 10 est ainsi montée de manière isolée sur un mur.

En pratique, après avoir tracé une ligne de niveau, l'installateur se sert des index 19 pour positionner de niveau la console de support 10, de telle sorte que la surface de support 11 soit horizontale.

Après repérage de la position des vis de fixation correspondant aux orifices 14 et 15 du socle de support 13, la paroi est percée et des vis correspondant aux orifices 14 sont positionnées dans le mur. Si nécessaire, des chevilles sont également placées dans le mur en correspondance avec les orifices 14 et 15 du socle 13.

La console de support 10 est ensuite positionnée en introduisant les vis au niveau des échancrures 14a, puis par translation de la console, en positionnant la tête de vis dans le fond plus étroit des orifices de fixation 14.

Les vis peuvent ainsi être bloquées, et des vis de blocage peuvent éventuellement être ajoutées au niveau des orifices de fixation 15.

Le chemin de câbles 40 peut ensuite être posé et fixé par boulonnage sur la surface de support 11 de la console 10, grâce aux orifices oblongs 20 prévus à cet effet.

En fonction du nombre de gorges 21 et de la largeur des chemins de câbles 40 utilisés par rapport à la longueur de chaque console de support 10, un ou plusieurs éléments de tuyauterie 45 peuvent être positionnés sur la surface de support 11. Chaque élément de tuyauterie 45 est placé dans une gorge 21 et bridé par un collier passant par les orifices 20, 23 disposés de part et d'autre de chaque gorge 21.

On notera en particulier que la longueur de la console 10 peut être différente, de manière à permettre le positionnement de plusieurs éléments de tuyauterie 45 parallèles les uns aux autres et au chemin de câbles.

Comme bien illustré aux figures 7 et 8, un collier de fixation 46 d'un élément de tuyauterie 45 peut être introduit d'une part dans un orifice rectangulaire 23 destiné à cet usage, et d'autre part dans un orifice oblong 20 destiné également à la fixation par boulonnage d'un chemin de câbles sur la surface de support 11 de la console de support 10.

Afin d'améliorer la fixation du chemin de câbles 40 sur la console de support 10 ou pour se substituer à une fixation par boulonnage, un collier de fixation 47 peut également être introduit dans des orifices 41 disposés dans le fond de ce chemin de câbles 40 et maintenu en position grâce aux encoches 12c prévues sur le bord 12b des ailes 12 de la console de support 10.

Par ailleurs, afin de faciliter la manipulation d'un chemin de câbles 40 et de son couvercle 42, comme illustré à la figure 5, le couvercle 42 peut être maintenu temporairement à l'extrémité de la console de support 10, grâce à la rainure 24, l'aile de retour 25 formant ainsi un crochet de maintien du couvercle 42.

Après fixation du chemin de câbles 40, ce couvercle est à la disposition de l'installateur pour venir obturer le chemin de câbles 40.

En fin de montage, et comme illustré à la figure 6, un accessoire d'identification du genre porte-étiquette 43 peut être fixé par clipsage sur l'aile de retour 25, au niveau de l'encoche 26, les butées 26a disposées de part et d'autre de cette encoche empêchant toute translation et retrait de cet accessoire 43.

Bien entendu, cette console de support 10 peut être utilisée différemment que de manière isolée, et notamment en coopération avec la glissière 30.

Ici, comme illustré à la figure 5, la console de support 10 peut être montée sur un mur au moyen d'une glissière 30. Cette glissière 30 peut être positionnée et fixée à une paroi grâce aux orifices oblongs 33 disposés dans le fond de la forme en U de cette glissière.

Le montage d'une console de support 10 sur une glissière 30 peut être réalisé grâce à des goupilles traversant à la fois les orifices 17 des parois latérales 16 du socle 13 de la console de support 10 et les orifices 34 disposés dans les ailes 32 de la glissière 30.

Grâce à l'inclinaison des orifices oblongs 17 par rapport au plan de la paroi, le blocage des goupilles peut être obtenu.

Les orifices circulaires 18 peuvent également être utilisés pour renforcer la fixation, ou alternativement lors du montage au moyen de boulons de la console de support 10 dans la glissière 30.

La console de support 10 conforme à l'invention peut également être utilisée comme élément de support d'une glissière, notamment lors d'un montage au plafond.

Ainsi comme illustré sur les figures 9 et 10, dans un montage en suspension simple, la console de support 10 est montée de telle manière que la face d'appui du socle 13 soit dirigée vers le plafond.

La glissière 30 est alors placée sur la console de support 10 de telle sorte que la surface de support 11 vient en appui sur la face intérieure du fond 31 de la glissière 30 et les ailes 12 de la console viennent également en contact avec l'intérieur des ailes 32 de la glissière 30.

La fixation de cette console de support 10 à la glissière 30 est réalisée grâce à des boulons ou des goupilles passant respectivement au travers des orifices oblongs 17' des ailes 12 de la console de support 10 et les orifices 34 des ailes 32 de la glissière 30.

Après fixation de la glissière 30 à la console de support 10, cette console 10 peut être fixée au niveau du socle 13 au plafond.

La fixation de ce socle 13 sur le plafond peut être réalisée de manière similaire à celle décrite précédemment pour la fixation de la console sur une paroi.

Il est alors possible de fixer comme expliqué précédemment en référence à la figure 5, différentes consoles de support 10' toutes identiques à la première console de support 10 ou de longueurs différentes, dans la hauteur de la glissière 30.

Dans ce type de montage en suspension simple, une console de support 10 est ainsi utilisée comme élément de fixation au plafond, et une ou plusieurs consoles de support 10' sont utilisées pour supporter des chemins de câbles, et des éléments de tuyauterie.

Comme bien illustré à la figure 10, une seconde glissière 30', identique à la première glissière 30, peut également être fixée sur la surface de support de la console de support 10', afin de prolonger celle-ci en longueur par exemple.

On notera ainsi qu'on obtient un ensemble de fixation de chemin de câbles comprenant une console 10 et une glissière 30 dans lequel la console 10 comporte à la fois des moyens de fixation à une paroi et des moyens de fixation d'une glissière et la glissière comprend également à la fois des moyens de fixation à une paroi et des moyens de fixation d'une console.

Cet ensemble de fixation permet ainsi de réaliser de multiples montages, avec des pièces identiques autorisant des utilisations multiples.

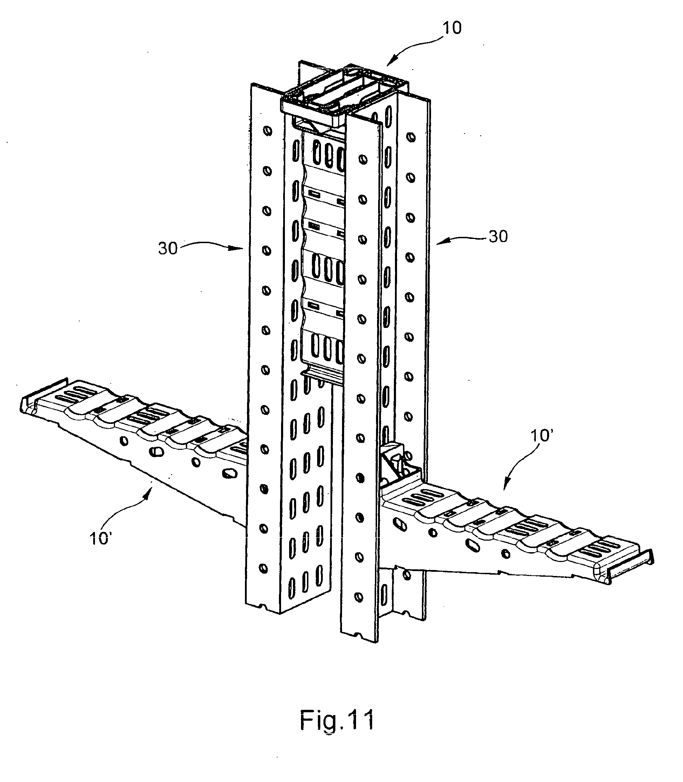

Un autre exemple de montage est illustré à la figure 11, en suspension double.

Plus précisément, une première console de support 10 est comme précédemment utilisée pour permettre la fixation au plafond de l'ensemble de fixation.

Deux glissières 30 sont montées de part et d'autre de la console de support 10.

Dans ce type de montage cependant, les ailes 12 de la console de support 10 sont en contact respectivement avec les faces extérieures des fonds 31 des deux glissières 30.

Le montage du fond 31 de chaque glissière 30 est réalisé au travers des orifices 33 du fond 31 et des orifices 17', 18' prévus sur les ailes 12 de la console de support 10, par exemple au moyen de boulons ou de goupilles.

Ensuite, de multiples consoles de support 10' peuvent également être disposées et montées à l'intérieur de chaque glissière 30 selon le montage décrit en référence à la figure 5.

Bien entendu, de nombreuses modifications peuvent être apportées aux exemples de réalisation décrits précédemment sans sortir du cadre de l'invention.

En particulier, le nombre de gorges permettant la fixation d'éléments de tuyauterie n'est pas limité.

En outre, les gorges de montage d'un élément de tuyauterie pourraient être disposées non pas sur la surface de support de la console, mais sur une autre face de la console, par exemple à une extrémité libre de cette console, perpendiculairement à la surface de support.

Par ailleurs, la rainure 24 de support temporaire d'un couvercle et les moyens de fixation 26, 26a d'un accessoire du type porte-étiquette pourraient être mis en oeuvre à l'extrémité d'une console de support d'un chemin de câbles non pourvue de gorges pour loger un élément de tuyauterie.

## Revendications

1. Console de support d'un chemin de câbles, **caractérisée en ce qu'**elle comprend à une extrémité (22) une rainure (24) formée entre une extrémité (11a) de la surface de support (11) d'un chemin de câbles (40) et une extrémité terminale (10a) de la console de support (10), ladite extrémité terminale (10a) étant adaptée à supporter temporairement un couvercle (42) d'un chemin de câbles (40).

2. Console de support conforme à la revendication 1, **caractérisée en ce que** l'extrémité terminale (10a) est constituée d'une aile de retour (25) adaptée à former un crochet de maintien d'un couvercle (42) d'un chemin de câbles (40).

3. Console de support conforme à la revendication 2, **caractérisée en ce que** ladite aile de retour (25) comprend des moyens de fixation (26, 26a) d'un accessoire d'identification (43).

4. Console de support conforme à la revendication 3, **caractérisée en ce que** ladite aile de retour (25) comporte une encoche (26) délimitée par des butées (26a).

5. Console de support conforme à l'une des revendications 1 à 4, **caractérisée en ce que** ladite rainure (24) s'étend transversalement à la direction longitudinale de ladite console de support (10).

6. Console de support d'un chemin de câbles comportant un couvercle (42) d'un chemin de câble en tant qu'accessoire, **caractérisée en ce qu'**elle comprend à une extrémité une rainure (24) formée entre une extrémité (11a) de la surface de support (11) d'un chemin de câbles et une extrémité terminale (10a) de la console de support (10) et adaptée à accrocher en attente ledit couvercle (42).

## Claims

1. A support bracket for a cable duct **characterised in that** it comprises at one end (22) a groove (24) formed between an end (11a) of the support surface (11) of a cable duct (40) and a terminal end (10a) of the support bracket (10), said terminal end (10a) being adapted to temporarily support a cover (42) of a cable duct (40).

2. A support bracket according to claim 1 **characterised in that** the terminal end (10a) is formed by a return arm (25) adapted to form a holding hook for a cover (42) of a cable duct (40).

3. A support bracket according to claim 2 **characterised in that** said return arm (25) comprises fixing means (26, 26a) for an identification accessory (43).

4. A support bracket according to claim 3 **characterised in that** said return arm (25) comprises a notch (26) delimited by abutments (26a).

5. A support bracket according to one of claims 1 to 4 **characterised in that** said groove (24) extends transversely to the longitudinal direction of said support bracket (10).

6. A support bracket for a cable duct comprising a cover (42) for a cable duct as an accessory, **characterised in that** it comprises at one end a groove (24) formed between a terminal end (11a) of the support surface (11) of a cable duct and a terminal end (10a) of the support bracket (10) and adapted to hookingly engage said cover (42) in waiting relationship.

## Patentansprüche

1. Tragkonsole für einen Kabelkanal,
**dadurch gekennzeichnet, dass** sie an einem Ende (22) eine Nut (24) aufweist, die zwischen einem Ende (11a) der Auflagefläche (11) für einen Kabelkanal (40) und einem äußersten Ende (10a) der Tragkonsole (10) gebildet ist, wobei das äußerste Ende (10a) vorübergehend eine Abdeckung (42) eines Kabelkanals (40) zu halten vermag.

2. Tragkonsole nach Anspruch 1,
**dadurch gekennzeichnet, dass** das äußerste Ende (10a) von einem abgewinkelten Flügel (25) gebildet Ist, der einen Haken zum Halten einer Abdeckung (42) eines Kabelkanals (40) zu bilden vermag.

3. Tragkonsole nach Anspruch 2,
**dadurch gekennzeichnet, dass** der abgewinkelte Flügel (25) Mittel (26, 26a) zum Befestigen eines Kennzeichnungszubehörs (43) umfasst.

4. Tragkonsole nach Anspruch 3,
**dadurch gekennzeichnet, dass** der abgewinkelte Flügel (25) eine Einkerbung (26) aufweist, die von Anschlägen (26a) begrenzt ist.

5. Tragkonsole nach einem der Ansprüche 1 bis 4,
**dadurch gekennzeichnet, dass** die Nut (24) quer zur Längsrichtung der Tragkonsole (10) verläuft.

6. Tragkonsole für einen Kabelkanal mit einer Kabelkanalabdeckung (42) als Zubehör,
**dadurch gekennzeichnet, dass** sie an einem Ende eine Nut (24) aufweist, die zwischen einem Ende (11a) der Auflagefläche (11) für einen Kabelkanal und einem äußersten Ende (10a) der Tragkonsole (10) gebildet ist und in die die bereitstehende Abdeckung (42) eingehängt werden kann.
